# FASCICULE DE BREVET EUROPEEN

(11) **EP 2 383 184 B1**
(45) Date de publication et mention de la délivrance du brevet: **21.03.2012**
(21) Numéro de dépôt: 11002896.6
(22) Date de dépôt: 07.04.2011
(51) Int. Cl.: B64C 27/22

(54) **Procédé de commande et de régulation de l'angle braquage d'un empennage d'hélicoptére hybride**
Verfahren zum Steuern und Regeln des Ausschlagwinkels einer Steuerfläche eines Hybridhubschraubers
Method of operating and controlling the deflection angle of a control surface of a hybrid helicopter

(30) Priorité: 27.04.2010 FR 1001789
(43) Date de publication de la demande: 02.11.2011
(73) Titulaire: EUROCOPTER, 13725 Marignane Cédex (FR)
(72) Inventeur: Eglin, Paul, 13830 Roquefort - La Bedoule (FR); Queiras, Nicolas, 13220 Chateauneuf-Les-Martigues (FR); Barraco, André, 94230 Cachan (FR); Malburet, François, 13111 Coudoux (FR)
(74) Mandataire: GPI & Associés

(56) Documents cités:
- EP-A1- 2 105 378
- FR-A1- 2 916 420

## Description

La présente invention se rapporte au domaine technique général des systèmes de commande de vol automatiques ou semi-automatiques et plus particulièrement à un procédé de commande et de régulation de l'angle de braquage d'un empennage mobile de giravion particulier, à savoir un hélicoptère hybride.

La présente invention se rapporte à un giravion et son système de commande d'un empennage mobile, dont l'angle de braquage est déterminé en fonction de paramètres spécifiques en vol stabilisé, à vitesse de croisière élevée.

On désigne par giravion un aéronef dont la sustentation est assurée totalement ou partiellement par une (ou plusieurs) hélice(s) d'axe sensiblement vertical, de grand diamètre, appelé rotor ou encore voilure tournante.

On distingue dans la catégorie des giravions plusieurs types distincts, mais l'hélicoptère hybride conforme à l'invention comporte en plus d'au moins un rotor principal, au moins une hélice propulsive, de préférence deux hélices propulsives à pas variable, faisant partie de groupes propulseurs latéralement à gauche et à droite de l'hélicoptère hybride.

L'hélicoptère classique dont au moins un rotor principal, entraîné par une motorisation appropriée, assure à la fois la sustentation et la propulsion. L'hélicoptère est capable de vol stationnaire en restant en un point fixe de l'espace, peut décoller et atterrir verticalement et peut se déplacer dans n'importe quelle direction (avant-arrière-côtés-haut-bas).

La régulation de la puissance motrice d'un hélicoptère classique (dénué de propulseur(s) à hélice(s)) comporte généralement un organe/module de commande qui adapte la puissance délivrée par l'installation motrice à la puissance requise par les ensembles dynamiques (rotor(s) et accessoires), de façon à maintenir le régime de rotation du (des) rotor(s) principal(aux) et de la chaîne de transmission de puissance, à sa valeur de consigne.

Sur un aéronef propulsé par hélice(s) dont le pas est variable, la régulation de puissance comporte généralement un organe/module de régulation (en général de type hydromécanique) qui adapte le pas de l'hélice propulsive de façon à consommer toute la puissance disponible résultant de la manipulation par le pilote d'un levier ou organe de commande des gaz (de la poussée).

Ces deux régulations ne peuvent pas être juxtaposées pour assurer la régulation de puissance d'un giravion équipé de propulseur(s) à hélice(s), car ces modes de régulation sont antagonistes. L'organe d'adaptation de puissance d'une régulation conventionnelle d'hélicoptère s'opposerait à une variation transitoire de vitesse de la chaîne de transmission de puissance qui résulterait d'une commande de variation de poussée sur l'hélice (ou les hélices).

Par ailleurs, pour un giravion équipé de propulseur(s) à hélice(s), une régulation du/des propulseur(s) à hélice(s) dans laquelle le pilote commanderait directement les variations de pas de l'hélice (des hélices) de propulsion, pourrait provoquer, par suite de variations brutales du couple moteur transmis à (aux) l'hélice(s), une détérioration de cette (ces) dernière(s).

Dans un hélicoptère hybride à hélices à pas variable, le pilote doit à la fois limiter d'une part le déplacement du pas collectif vers le haut et par suite la puissance transmise au(x) rotor(s) par la motorisation via les organes de transmission pour ne pas dépasser les limitations mécaniques ou thermiques de ces éléments et, d'autre part, pour les mêmes raisons, limiter la commande de poussée des hélices c'est-à-dire la commande de pas des hélices, comme expliqué ci-après.

Par ailleurs, la motorisation de l'hélicoptère hybride étant constituée par un (des) turbomoteur(s), les vitesses de rotation des sorties du (ou des) turbomoteur(s), de la (ou des) hélice(s), du (des) rotor(s) et du système mécanique d'interconnexion sont proportionnelles entre elles, le rapport de proportionnalité étant constant quelle que soit la configuration de vol de l'hélicoptère hybride en conditions normales de fonctionnement de la chaîne cinématique intégrée.

On comprend ainsi que si l'hélicoptère hybride est équipé d'un seul turbomoteur, celui-ci entraîne en rotation le(s) rotor(s) et la (ou les) hélice(s) via le système mécanique d'interconnexion. Par contre, si deux turbomoteurs ou plus équipent l'hélicoptère hybride, le(s) rotor(s) et la (ou les) hélice(s) sont alors entraînés en rotation via le système mécanique d'interconnexion par lesdits turbomoteurs.

Autrement dit, la chaîne cinématique fonctionne sans rapport de vitesse de rotation variable entre le (ou les) turbomoteur(s), la (ou les) hélice(s), le(s) rotor(s) et le système mécanique d'interconnexion.

Par conséquent, le(s) rotor(s) demeure(nt) avantageusement toujours entraîné(s) en rotation par le(s) turbomoteur(s) dans des configurations normales de vol, et développe(nt) toujours une portance quelle que soit la configuration de l'appareil.

Plus précisément, le(s) rotor est (sont) de la sorte destiné(s) à assurer la totalité de la portance de l'hélicoptère hybride pendant les phases de décollage, d'atterrissage et de vol vertical puis partiellement pendant le vol de croisière, une aile auxiliaire contribuant alors pour partie à supporter ledit hélicoptère hybride.

Ainsi, le(s) rotor(s) exerce(nt) partiellement la sustentation de l'hélicoptère hybride en vol de croisière avec éventuellement une faible contribution aux forces propulsives ou traction (cas de l'hélicoptère), mais sans aucune contribution à la traînée. Ces conditions de fonctionnement conduisent donc à une fourniture réduite de puissance dédiée à la traction du (des) rotor(s). Une faible contribution aux forces propulsives se fait par une faible inclinaison du (des) disque(s) rotor vers l'avant de l'appareil. Ce processus dégrade très peu la finesse du (des) rotor(s) et se révèle par suite plus intéressant en terme de bilan de puissance qu'une demande de poussée supplémentaire exercée par la (ou les) hélice(s).

De façon avantageuse, l'aile est composée de deux demi-ailes, chaque demi-aile étant de part et d'autre du fuselage. Ces demi-ailes peuvent constituer une aile haute, auquel cas elles présentent de préférence un dièdre négatif. Cependant, elles peuvent aussi constituer soit une aile basse avec de préférence un dièdre positif ou encore une aile intermédiaire avec un dièdre quelconque. La forme en plan de ces demi-ailes, selon les variantes, peut correspondre à des demi-ailes rectangulaires, effilées, en flèche avant ou arrière ou autres.

Dans la suite, il sera fait référence à un empennage d'aéronef mobile ou empennage motorisé, signifiant que l'angle de braquage dudit empennage peut prendre différentes valeurs.

Par ailleurs, le terme « appareil » désigne de façon générique l'aéronef dont il est question dans la partie concernée.

Dans une configuration «avion», l'empennage est la gouverne de profondeur de l'appareil. C'est un organe direct de pilotage en tangage et en vitesse verticale de l'appareil.

Dans une configuration « hélicoptère », l'empennage de l'appareil est le plus souvent fixe. Un empennage à angle de braquage variable sur un hélicoptère peut être utilisé pour contrer le phénomène dit de bosse d'assiette ou pour voler à assiette nulle en vol d'avancement afin de diminuer la traînée ou pour diminuer l'assiette à cabrer lorsque l'hélicoptère est fortement centré arrière. Cependant, à partir d'une certaine vitesse d'avancement, un hélicoptère conventionnel ne peut conserver une assiette nulle sur toute la plage de centrage (à savoir la plage de variation du centre de gravité de l'aéronef) car le moment de flexion exercé sur le mât du rotor dit couramment « moment de mât » serait trop élevé. Le bénéfice d'un empennage à angle de braquage variable est par conséquent obtenu pour des vitesses d'avancement faibles ou modérées. Ce qui précède s'applique a priori pour un empennage fixe avec ou sans volets.

On connaît, par exemple par l'intermédiaire du document FR 2 916 420, un giravion comportant un empennage motorisé à gouvernes de profondeur motorisées pour conserver un moment de mât nul en vol d'avancement. Ceci permet de réduire les efforts sur un certains nombre de pièces mécaniques.

Un moment de mât nul correspond à un point de fonctionnement particulier de l'aéronef et ne permet par conséquent qu'une optimisation très limitée du bilan de puissance. En outre, dans un certain nombre de configurations de vol, il n'est pas possible de conserver un moment de mât nul.

De plus une configuration qui minimise le moment de mât en vol de croisière, n'est pas forcément celle qui minimise la puissance nécessaire.

Le but de la présente invention vise à proposer un nouveau giravion conforme à l'hélicoptère hybride dont le bilan de puissance est optimisé et ce pour différentes vitesses d'avancement élevées et stabilisées, indépendamment du moment de mât de rotor.

L'objet de la présente invention vise par conséquent à proposer un nouveau procédé de commande et de régulation de l'angle de braquage d'un empennage horizontal motorisé d'un giravion du genre hélicoptère hybride, pour optimiser le bilan de puissance.

Un autre objet de la présente invention vise par conséquent à proposer un nouveau système de pilotage automatique intégrant des fonctions de commande et de régulation pour déterminer et modifier la position angulaire d'un empennage d'un giravion du genre hélicoptère hybride, pour optimiser le bilan de puissance.

Il convient d'entendre les termes « optimiser le bilan de puissance » comme le fait de minimiser la puissance totale consommée par la voilure tournante et les hélices propulsives d'un giravion du genre hélicoptère hybride, en vol de croisière rapide et stabilisé.

En outre, il convient d'entendre qu'au sens de la présente, les termes « empennage horizontal motorisé » englobent également des réalisations à empennage fixe comportant une ou plusieurs gouvernes horizontales motorisées de type volets apte être braquer.

Il est évident que la présente invention concerne les aéronefs à une ou à plusieurs hélices propulsives.

Divers paramètres physiques sont susceptibles d'être utilisés dans la suite, parmi lesquels IAS est la vitesse air indiquée, *VNE* est la vitesse air maximale autorisée, U est la vitesse de déplacement angulaire de l'empennage mobile par rapport au fuselage de l'appareil et T est une durée d'activation.

Les objectifs assignés à l'invention sont atteints à l'aide d'un procédé de commande et de régulation d'un giravion à vitesse d'avancement élevée et stabilisée, comportant au moins un rotor principal de sustentation, au moins une hélice propulsive à pas variable et au moins une source motrice pour entraîner le(s) rotor(s) principal(aux) et au moins une hélice, ledit procédé consistant à utiliser une première boucle de régulation en tangage ou assiette longitudinale par l'intermédiaire d'une commande de pas cyclique longitudinal des pales du ou des rotors principaux et une seconde boucle de régulation en vitesse par l'intermédiaire d'une commande du pas moyen des pales de la ou des hélices propulsives, caractérisé en ce qu'il consiste à commander l'angle de braquage d'un empennage horizontal en utilisant une troisième boucle de commande et de régulation dudit angle de braquage de l'empennage horizontal, pour minimiser la puissance totale consommée par le rotor principal et la ou les hélices propulsives, pour une assiette et une vitesse d'avancement données.

Le procédé de commande et de régulation permet ainsi de piloter l'empennage d'un appareil hybride afin de faire varier et d'optimiser la proportion de puissance entre le rotor et les hélices propulsives, pour un point d'équilibre déterminé, de l'appareil en vitesse et en assiette. Le point d'équilibre est assuré par la première boucle de régulation en tangage ou assiette longitudinale par l'intermédiaire d'une commande de pas cyclique longitudinal et par la seconde boucle de régulation en vitesse par l'intermédiaire d'une commande du pas moyen de la ou des hélices propulsives

Selon un exemple de mise en oeuvre conforme à l'invention, le procédé consiste à répartir la puissance totale consommée entre le rotor principal et la ou les hélices propulsives en agissant sur les commandes de pas correspondantes par l'intermédiaire du réglage de l'angle de braquage de l'empennage horizontal.

Selon un exemple de mise en oeuvre conforme à l'invention, le procédé consiste à activer la boucle de commande et de régulation de l'angle de braquage de l'empennage que si :
- l'angle de roulis est inférieur à 10°,
- la vitesse IAS est supérieure à 100 kts,
- et aucune action sur les axes de commande de l'appareil de la part du pilote, n'est détectée.

Selon un exemple de mise en oeuvre conforme à l'invention, le procédé se base sur un algorithme de minimisation consistant à :
- (a) déterminer la puissance courante Pe délivrée par la source motrice après l'activation de la boucle de commande et de régulation,
- (b) mémoriser la puissance courante Pe,
- (c) commander une première vitesse de déplacement U= θ+ de l'empennage motorisé pendant une durée T,
- (d) ensuite déterminer et mémoriser la nouvelle puissance courante Pe',
- (e) comparer Pe' à Pe,
- (f) si Pe' ≥ Pe, commander une seconde vitesse de déplacement U= θ- de l'empennage motorisé pendant une durée T+1/2T, θ- étant une vitesse opposée à la première vitesse U= θ+, sinon revenir à l'étape (b),
- (g) à l'issue de la durée T+1/2T, déterminer et mémoriser la nouvelle puissance courante Pe",
- (h) comparer Pe" à Pe',
- si Pe" ≥ Pe', commander une vitesse de déplacement U nulle de l'empennage motorisé, sinon revenir à l'étape (b).

Selon un exemple de mise en oeuvre conforme à l'invention, le procédé consiste à surveiller la marge de commande du pas cyclique longitudinal des pales du ou des rotors principaux et à inhiber la motorisation de l'empennage lorsque cette marge est inférieure à un seuil déterminé, par exemple égal à 10%.

Dans un cas extrême, il se peut en effet que le pilote soit en butée de manche à piquer alors que l'appareil a une assiette nulle ou même positive. Dans une telle hypothèse, le pilote ne disposerait d'aucune marge de commande. La solution consiste donc à surveiller la marge de commande du pas cyclique longitudinal et d'inhiber la motorisation de l'empennage lorsque cette marge est inférieure au seuil déterminé. Dans une configuration extrême inverse, le rotor passe dans un mode de fonctionnement en autorotation et le battement vers l'arrière des pales de ce rotor devient de plus en plus important avec des risques de rupture mécanique.

Une solution, selon un exemple de mise en oeuvre du procédé conforme à l'invention consiste, avec le rotor principal en mode autogire, à inhiber positivement (bord d'attaque d'empennage vers le haut) la motorisation de l'empennage lorsqu'un seuil minimal de puissance courante du rotor principal est atteint et ce tant que la contrainte maximale du moment de mât n'est pas dépassée. Un tel dépassement conduirait à une fatigue accentuée du mât et du moyeu du rotor. Le procédé de commande et de régulation conforme à l'invention optimise donc la répartition de la puissance consommée entre les hélices propulsives et le rotor principal tout en assurant qu'une limite de battement ou qu'une limite de marge de commande du pas cyclique longitudinal ne soit atteinte.

Selon un exemple de mise en oeuvre conforme à l'invention, le procédé consiste, en mode de fonctionnement en autorotation, à orienter l'empennage positivement, en position extrême (bord d'attaque d'empennage vers le haut) pour favoriser la configuration du type autogire au niveau de l'aéronef.

En effet, cette configuration facilite la mise en autorotation car elle maintient le rotor principal en puissance négative. Le rotor principal s'incline vers l'arrière et favorise ainsi le passage en autorotation si celle-ci doit s'avérer nécessaire.

Les objets assignés à l'invention sont également atteints à l'aide d'un système de commande et de régulation pour mettre en oeuvre le procédé de commande et de régulation d'un giravion, ledit giravion comportant au moins un rotor principal de sustentation, au moins une hélice propulsive à pas variable et au moins une source motrice pour entraîner le(s) rotor(s) principal(aux) et l'hélice ou les hélices (6), ledit système comprenant :
- des moyens pour mettre en oeuvre la première boucle de régulation en tangage ou assiette longitudinale par l'intermédiaire d'une commande cyclique longitudinale du pas cyclique des pales du rotor principal,
- et des moyens pour mettre en oeuvre la seconde boucle de régulation en vitesse par l'intermédiaire d'une commande du pas moyen de la ou des hélices (6) propulsives,
   caractérisé en ce qu'il comprend :
- un moyen d'activation et de désactivation de la troisième boucle de commande et de régulation de l'angle de braquage de l'empennage horizontal motorisé,
- un calculateur pour déterminer la position angulaire de braquage de l'empennage horizontal motorisé,
- au moins un actionneur piloté par le calculateur et entraînant en pivotement l'empennage horizontal motorisé,
- et au moins un capteur pour vérifier la position angulaire de braquage.

Selon un exemple de réalisation, le système de commande et de régulation comprend des moyens pour déterminer en temps réel le moment de mât et la puissance consommée par le rotor principal.

Les objets assignés à l'invention sont également atteints à l'aide d'un système de pilotage automatique pour un giravion comportant au moins un rotor principal de sustentation, au moins une hélice propulsive à pas variable et au moins une source motrice pour entraîner le(s) rotor(s) principal(aux) et l'hélice ou les hélices, caractérisé en ce qu'il comprend un système de commande et de régulation tel que présenté ci-dessus.

Les objets assignés à l'invention sont également atteints à l'aide d'un programme de commande d'un giravion pour mettre en oeuvre le procédé de commande et de régulation conforme à l'invention, caractérisé en ce qu'il comporte un code fixé sur un support tel qu'une mémoire ou matérialisé par un signal, le code étant lisible et/ou exécutable par au moins une unité de traitement de données telle qu'un processeur embarqué ou susceptible d'être embarqué sur un giravion, pour commander et/ou réguler l'angle de braquage d'un empennage horizontal motorisé, le code comportant des segments de code pour mettre en oeuvre respectivement des opérations caractéristiques ou étapes du procédé de commande et de régulation.

Les objets assignés à l'invention sont également atteints à l'aide d'un aéronef du genre giravion, comportant un système de commande et de régulation tel que présenté ci-dessus.

Le procédé de commande et de régulation conforme à l'invention présente l'avantage d'optimiser la puissance consommée par l'aéronef pour une assiette et une vitesse d'avancement données.

Le procédé de commande et de régulation conforme à l'invention présente encore l'avantage d'augmenter la distance franchissable de l'aéronef. Ainsi, pour optimiser la distance franchissable, il suffit d'afficher une consigne d'assiette nulle, d'afficher une consigne de vitesse air *IAS* égale à la vitesse de croisière économique et d'enclencher la loi de gestion de la position angulaire de l'empennage conformément à l'invention. De la même manière, en montée à faible pente par exemple, il suffit d'afficher une consigne d'assiette égale à la pente de la trajectoire de montée et un taux de montée en fonction de ladite pente et de la vitesse air *IAS* de consigne, puis d'enclencher la loi de gestion de la position angulaire de l'empennage pour optimiser la distance franchissable en phase de montée.

En outre, le procédé de commande et de régulation conforme à l'invention présente l'avantage d'influencer la stabilité de l'aéronef, car le mode propulsif du rotor principal offre une meilleure stabilité à cet aéronef.

Le procédé de commande et de régulation conforme à l'invention présente également l'avantage de faciliter les manoeuvres d'autorotation.

Par ailleurs, l'invention permet de respecter la plage de commande du pas cyclique longitudinal et de pas collectif du pas des pales du rotor principal en inhibant la motorisation de l'empennage dès lors que la marge à piquer se réduit en dessous d'un seuil prédéfini (mode rotor propulsif) ou que le pas collectif descend en dessous d'un seuil prédéfini (mode rotor autogire).

D'autres aspects, caractéristiques, et avantages de l'invention apparaissent dans la description qui suit, avec des exemples de réalisation donnés à titre illustratif en référence aux figures annexées qui représentent :
- figure 1 : une vue en perspective d'un exemple de réalisation d'un hélicoptère hybride conforme à l'invention,
- figure 2a : une vue schématique de profil d'un exemple de réalisation d'un hélicoptère hybride selon l'invention, comportant un empennage mobile braqué dans une position angulaire donnée,
- figure 2b : une vue schématique de profil d'un exemple de réalisation d'un hélicoptère hybride selon l'invention, comportant un empennage mobile braqué dans une autre position angulaire,
- et figure 3 : un logigramme d'un exemple de mise en oeuvre d'une boucle de commande de l'angle de braquage d'un empennage motorisé en fonction d'un bilan de puissance

consommée, dans le cadre d'un procédé de commande conforme à l'invention.

Au sens de la présente demande, l'expression « hélicoptère hybride » désigne donc un giravion équipé d'au moins un propulseur du genre hélice, avec une régulation adaptée au fonctionnement du rotor ou des rotors de sustentation voire de propulsion d'une part et à celui de l'hélice ou des hélices d'autre part.

Sauf indication contraire, explicite ou implicite, les termes « rotor » ou « rotor principal » désignent une voilure tournante du giravion.

Sauf indication contraire, explicite ou implicite, les éléments structurellement et fonctionnellement identiques et présents sur plusieurs figures distinctes, sont affectés d'une seule et même référence numérique ou alphanumérique.

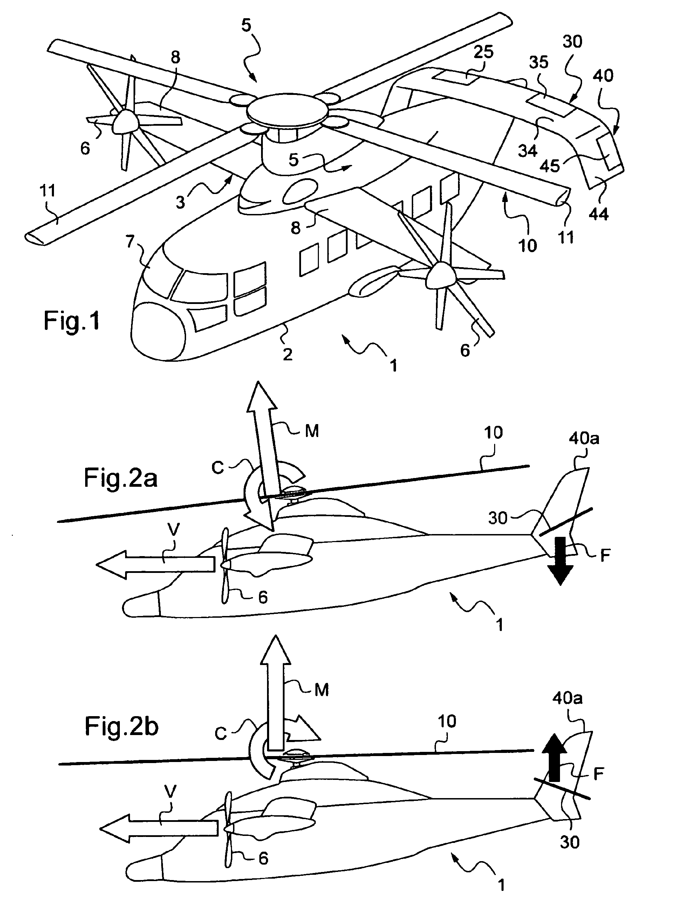

Par référence à la figure 1 notamment, l'hélicoptère hybride 1 comprend un fuselage 2, à l'avant duquel est prévu le poste de pilotage 7, un rotor principal 10 destiné à entraîner en rotation des pales 11 grâce d'une part à deux turbomoteurs 5 disposés sur le dessus du fuselage 2 (non visibles sur la figure 1 en raison de la présence de carénages), de part et d'autre par rapport au plan de symétrie longitudinal de l'appareil, et d'autre part à une première boîte d'engrenages principale MGB, non représentée sur la figure 1.

De plus, l'hélicoptère hybride 1 est pourvu d'une aile haute 3 composée de deux demi-ailes 8 disposées sur le dessus du fuselage 2, ces demi-ailes 8 ayant une forme en plan sensiblement rectangulaire et présentant un dièdre négatif.

La propulsion de l'hélicoptère hybride 1 est assurée par deux hélices 6 propulsives entraînées par les deux turbomoteurs 5, une hélice 6 propulsive étant disposée à chaque extrémité externe de l'aile 3.

Par ailleurs, il est prévu, au voisinage de l'extrémité arrière du fuselage 2, des surfaces de stabilisation et de manoeuvre à savoir pour la profondeur, un empennage horizontal 30 avec deux gouvernes de profondeur mobiles 25, 35 par rapport à la partie avant 34 et pour la direction deux empennages appropriés 40, chacun de chaque côté de l'empennage horizontal 30.

Avantageusement, les empennages 40, verticaux ou inclinés par rapport à la verticale, peuvent être constitués d'une partie avant fixe (ou dérive) 44 avec en arrière une partie mobile, ou gouverne de direction 45 pour le pilotage en lacet.

En l'occurrence, l'empennage horizontal 30 et les empennages verticaux 40 forment un U renversé vers le fuselage 2.

De plus, l'hélicoptère hybride 1 est équipé d'une chaîne cinématique intégrée (non représentée à la figure 1), qui, outre les deux turbomoteurs 5, le rotor 10 et les deux hélices 6, comprend un système mécanique d'interconnexion (non représenté à la figure 1) entre ces éléments de sorte qu'il faut comprendre que le rotor 10 et les hélices 6 sont en rotation dans des plans orthogonaux et non parallèles.

Avec cette configuration, cet hélicoptère hybride 1 est remarquable en ce que les vitesses de rotation des sorties des turbomoteurs, des hélices, du rotor et du système mécanique d'interconnexion sont proportionnelles entre elles, le rapport de proportionnalité étant constant quelle que soit la configuration de vol de l'hélicoptère hybride en conditions normales de fonctionnement de la chaîne cinématique intégrée.

Bien évidemment, des dispositifs particuliers, sortant du cadre de l'invention, sont activés lors de pannes mécaniques éventuelles.

La consigne de vitesse de rotation peut être considérée comme une constante pour des hélicoptères classiques ou des aéronefs conformes à l'invention. Il existe cependant des méthodes, connues en tant que telles, de calcul et/ou de détermination de la consigne de vitesse de rotation des hélices 6 propulsives. Pour certaines applications, à vitesse de l'aéronef constante, la consigne de vitesse de rotation varie en fonction des conditions atmosphériques telles que l'altitude et la température.

Dans l'exemple de réalisation décrit ci-après et se rapportant notamment aux figures 2a et 2b, l'empennage 30 fixe et les gouvernes 25,35 sont avantageusement remplacés par un empennage horizontal 30 motorisé dans son ensemble et localisé avec une partie respective de chaque côté d'une dérive verticale 40a.
La figure 2a est une vue schématique de profil d'un exemple de réalisation d'un hélicoptère hybride 1 selon l'invention, comportant l'empennage horizontal 30 mobile, braqué dans une première position angulaire.
La figure 2b est une vue schématique de profil d'un exemple de réalisation d'un hélicoptère hybride 1 selon l'invention, comportant un empennage 30 mobile, braqué dans une seconde position angulaire.

Les première et seconde positions angulaires de l'empennage sont représentatives de configurations de vol différentes.

Les flèches M, C, V et F correspondent respectivement à la portance du rotor principal, au moment longitudinal à cabrer ou piquer du rotor principal, à la force de propulsion générée par les hélices 6 propulsives et à la force résultante exercée sur la queue de l'appareil ou force de portance de l'empennage.

L'invention concerne par exemple un système de commande et de régulation pour mettre en oeuvre un procédé de commande et de régulation d'un giravion. Le système comprend des moyens pour mettre en oeuvre une première boucle de régulation en tangage ou assiette longitudinale par l'intermédiaire d'une commande cyclique longitudinale et des moyens pour mettre en oeuvre une seconde boucle de régulation en vitesse par l'intermédiaire d'une commande du pas moyen de la ou des hélices 6 propulsives.

Le système de commande et de régulation comprend également un moyen d'activation et de désactivation d'une troisième boucle de commande et de régulation de l'angle de braquage de l'empennage 30 horizontal motorisé et un calculateur pour déterminer la position angulaire de braquage de l'empennage 30 horizontal motorisé.

Au moins un actionneur électrique, piloté par le calculateur, entraîne en pivotement l'empennage 30 horizontal motorisé.

Le calage de l'empennage 30 est contrôlé par exemple en utilisant au moins un capteur mesurant la position angulaire de braquage dudit empennage 30.

Le système de commande et de régulation peut comprendre par ailleurs des moyens pour déterminer en temps réel le moment de mât M et la puissance consommée par le rotor principal.

Le système de commande et de régulation fait avantageusement partie d'un système de pilotage automatique pour un giravion.

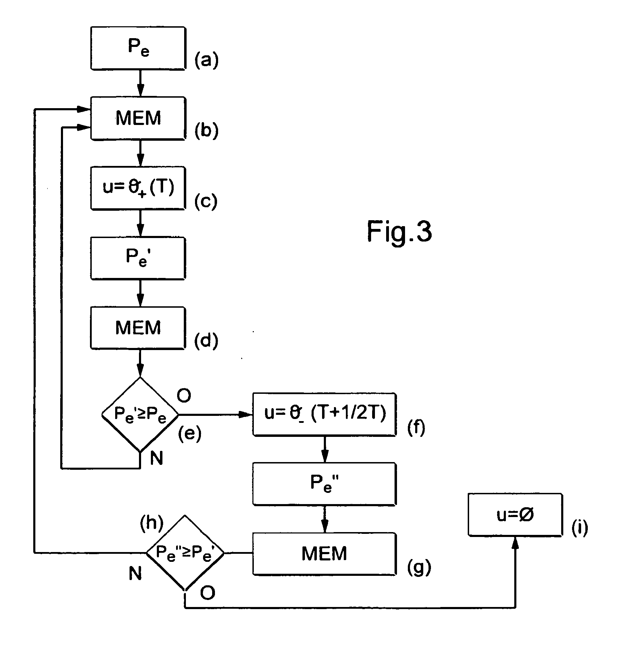

La figure 3 est un logigramme d'un exemple de mise en oeuvre d'une boucle de commande de l'angle de braquage d'un empennage 30 motorisé en fonction d'un bilan de puissance consommée, dans le cadre d'un procédé de commande conforme à l'invention.

Le procédé de commande et de régulation concerne donc un giravion à vitesse élevée et stabilisée, comportant au moins un rotor principal de sustentation, au moins une hélice 6 propulsive à pas variable et au moins une source motrice pour entraîner le(s) rotor(s) principal(aux) et au moins une hélice 6. Le procédé consiste à utiliser une première boucle de régulation en tangage ou assiette longitudinale par l'intermédiaire d'une commande de pas cyclique longitudinal des pales du rotor principal et une seconde boucle de régulation en vitesse par l'intermédiaire d'une commande du pas moyen de la ou des hélices 6 propulsives.

Le procédé conforme à l'invention consiste également à commander l'angle de braquage d'un empennage 30 horizontal en utilisant une troisième boucle de commande et de régulation dudit angle de braquage de l'empennage 30 horizontal, pour minimiser la puissance totale consommée par le rotor principal et la ou les hélices (6) propulsives, pour une assiette et une vitesse donnée d'avancement du giravion.

Selon un exemple de mise en oeuvre, le procédé consiste à répartir la puissance totale consommée entre le rotor principal 10 et la ou les hélices propulsives (6) en agissant sur les commandes de pas correspondantes par l'intermédiaire du réglage de l'angle de braquage de l'empennage 30 horizontal.

Selon un exemple de mise en oeuvre, les conditions d'activation de la boucle de commande et de régulation de l'angle de braquage de l'empennage 30 sont :
- l'angle de roulis est inférieur à 10°,
- la vitesse IAS est supérieure à 100 kts,
- et aucune action sur les axes de commande de l'appareil de la part du pilote, n'est détectée.

Selon un exemple de mise en oeuvre, le procédé se base sur un algorithme de minimisation consistant :
- selon une étape (a), à déterminer la puissance courante Pe délivrée par la source motrice après l'activation de la boucle de commande et de régulation,
- selon une étape (b), à mémoriser la puissance courante délivrée Pe,
- selon une étape (c), à commander une première vitesse de déplacement U= θ+ de l'empennage 30 motorisé pendant une durée T, θ+ étant une vitesse de déplacement vers le haut du bord d'attaque de l'empennage 30,
- selon une étape (d), à déterminer ensuite et à mémoriser la nouvelle puissance courante Pe',
- selon un étape (e), à comparer Pe' à Pe,
- selon une étape (f), si Pe' ≥ Pe, à commander une seconde vitesse de déplacement U= θ- de l'empennage motorisé pendant une durée T+1/2T, θ- étant une vitesse opposée à la première vitesse U= θ+, sinon revenir à l'étape (b),
- selon une étape (g) à l'issue de la durée T+1/2T, à déterminer et à mémoriser la nouvelle puissance courante Pe",
- selon une étape (h), à comparer Pe" à Pe',
- selon une étape (i), si Pe" ≥ Pe' à commander une vitesse de déplacement U nulle de l'empennage motorisé, sinon revenir à l'étape (b).

Les vitesses U sont par exemple des vitesses angulaires égales à 0,1°/s et la durée T est égale à 10 secondes par exemple.

Selon un exemple de mise en oeuvre, le procédé conforme à l'invention consiste à surveiller la marge de commande du pas cyclique longitudinal des pales du rotor principal et à inhiber la motorisation de l'empennage 30 lorsque cette marge est inférieure à un seuil déterminé.

Selon un exemple de mise en oeuvre, le procédé conforme à l'invention consiste, avec le rotor principal 10 en mode de fonctionnement en autorotation durant le mode de fonctionnement en autogire de l'aéronef, à inhiber positivement (côté avant vers le haut) la motorisation de l'empennage 30 lorsqu'un seuil minimal de puissance courante du rotor principal est atteint et ce tant que la contrainte maximale du moment de mât M n'est pas dépassée ce qui pourrait occasionner une fatigue accentuée du mât et moyeu rotor.

Selon un exemple de mise en oeuvre, le procédé conforme à l'invention consiste, en mode de fonctionnement en autogire de l'aéronef durant lequel le rotor principal est en autorotation, à orienter l'empennage 30 positivement en position extrême (côté avant vers le haut) pour favoriser la configuration du type autorotation au niveau du rotor principal 10.

La présente invention concerne également un programme de commande d'un giravion pour mettre en oeuvre le procédé de commande et de régulation. Ce programme comporte un code fixé sur un support tel qu'une mémoire ou matérialisé par un signal, le code étant lisible et/ou exécutable par au moins une unité de traitement de données telle qu'un processeur embarqué ou susceptible d'être embarqué sur un giravion, pour commander et/ou réguler le réglage de l'angle de braquage d'un empennage horizontal motorisé, le code comportant des segments de code pour mettre en oeuvre respectivement des opérations caractéristiques ou étapes dudit procédé de commande et de régulation.

Ainsi, pour un appareil de configuration hybride, un empennage 30 motorisé a les mêmes avantages que pour un hélicoptère conventionnel, à savoir la diminution de la bosse d'assiette et la limitation de l'assiette à piquer en vol d'avancement. L'utilisation d'un empennage 30 motorisé, à vitesse d'avancement élevé de l'appareil, est très différente.

En effet, un appareil hybride peut voler à assiette nulle car le rotor principal assure essentiellement la sustentation de l'appareil. Un empennage calé négativement (bord d'attaque d'empennage vers le bas) génère un moment de cabrage de l'appareil. Pour rester à assiette nulle, cela demande alors une commande cyclique à piquer pour contrer au niveau du rotor principal 10, l'action de l'empennage 30. Le rotor principal est alors en mode propulsif, une composante de sa portance étant utilisée pour la propulsion de l'appareil. La puissance consommée par le rotor principal 10 est de ce fait élevée. Cet exemple de configuration est illustré par la figure 2a.

Dans une situation inverse, un empennage 30 calé positivement (bord d'attaque d'empennage vers le haut), génère un moment piqueur de l'appareil. Pour rester à assiette nulle, une commande cyclique à cabrer est nécessaire. Le rotor principal 10 passe alors en mode autogire, sa portance assurant uniquement la sustentation de l'appareil et sa puissance consommée étant faible voire nulle ou négative. Cet exemple de configuration est illustré par la figure 2b.

En outre, pour rester à vitesse constante, les hélices 6 propulsives doivent compenser les variations perçues au niveau de la propulsion du rotor principal 10. En effet, si le rotor principal 10 est en mode propulsif, il participe à la propulsion de l'appareil mais dégrade sa finesse aérodynamique. Les hélices 6 peuvent alors être déchargées pour conserver la même vitesse d'avancement de l'appareil. Ceci améliore par ailleurs le rendement propulsif des hélices 6. Le pas de hélices 6 va être diminué ainsi que la puissance consommée.

Ainsi, pour une vitesse d'avancement constante et pour une modification du braquage de l'empennage 30, si la puissance consommée augmente au niveau du rotor principal 10, la puissance consommée au niveau des hélices 6 va diminuer.

Un raisonnement similaire s'applique de manière inverse pour le mode autogire de l'aéronef. Si la puissance consommée diminue au niveau du rotor principal 10 en conservant la même vitesse d'avancement, le pas de hélices 6 va augmenter ainsi que leur puissance consommée. En mode autogire, la finesse du rotor principal 10 s'améliore mais le rendement propulsif des hélices 6 se dégrade.

La motorisation de l'empennage 30 permet donc d'ajuster la répartition de puissance entre le rotor principal 10 et les hélices 6, tout en restant à iso-assiette et à iso-vitesse. Les sollicitations des pièces mécaniques du rotor principal 10 différent substantiellement des sollicitations existant dans un hélicoptère conventionnel. Le positionnement de l'empennage grâce au procédé conforme à l'invention permet donc de satisfaire une consommation minimale de puissance à vitesse constante et assiette donnée. Le critère de performance et la diminution de consommation de carburant sont nettement améliorés grâce au procédé et aux systèmes conformes à l'invention.

La gestion de l'empennage 30 constitue ainsi une troisième boucle de régulation sur l'équilibre en tangage et en propulsion de l'appareil. Des vérins série et des vérins parallèles assurent d'abord la stabilisation de l'appareil sur l'axe de tangage et sur l'axe propulsif de l'appareil. Une fois l'assiette stabilisée et la vitesse maintenue, une régulation complémentaire intervient en agissant sur la position de l'empennage 30. Le calage de l'empennage 30 est alors modifié pour rechercher une puissance consommée minimale tout en conservant la vitesse et l'assiette de l'appareil. Ceci est rendu possible par la répartition de la puissance consommée entre le rotor principal 10 et les hélices 6 et par leurs rendements respectifs pour une vitesse d'avancement donnée.

Le procédé conforme à l'invention, plus particulièrement décrit avec une application comportant un rotor principal 10 et deux hélices 6 propulsives, est transposable sans difficulté à une application comportant par exemple une seule hélice 6 propulsive et/ou deux rotors principaux 10 de sustentation sans sortir du cadre de la présente invention.

Les systèmes avioniques embarqués comprennent différentes fonctionnalités de mesure et/ou de calcul pour fournir des valeurs de paramètres de vol utilisés dans le cadre de la présente invention. Ces fonctionnalités sont connues en tant que telles et ne sont par conséquent pas décrites.

Naturellement, la présente invention est sujette à de nombreuses variations quant à sa mise en oeuvre. Bien que plusieurs modes de réalisations et de mise en oeuvre aient été décrits, on comprend bien qu'il n'est pas concevable d'identifier de manière exhaustive tous les modes possibles. Il est bien sûr envisageable de remplacer un moyen décrit ou une étape décrite, par un moyen équivalent ou une étape équivalente, sans sortir du cadre de la présente invention.

## Revendications

1. Procédé de commande et de régulation d'un giravion à vitesse d'avancement élevée et stabilisée, comportant au moins un rotor principal (10) de sustentation, au moins une hélice (6) propulsive à pas variable et au moins une source motrice pour entraîner le(s) rotor(s) principal(aux) (10), ledit procédé consistant à utiliser une première boucle de régulation en tangage ou assiette longitudinale par l'intermédiaire d'une commande de pas cyclique longitudinal (C) des pales du ou des rotors principal(aux) (10) et une seconde boucle de régulation en vitesse par l'intermédiaire d'une commande du pas moyen des pales de la ou des hélices (6) propulsives,
**caractérisé en ce qu'**il consiste à commander l'angle de braquage d'un empennage (30,25,35) horizontal en utilisant une troisième boucle de commande et de régulation dudit angle de braquage de l'empennage horizontal, pour minimiser la puissance totale consommée par le rotor principal (10) et la ou les hélices (6) propulsives, pour une assiette et une vitesse d'avancement donnée.

2. Procédé de commande et de régulation selon la revendication 1,
**caractérisé en ce qu'**il consiste à répartir la puissance totale consommée entre le rotor principal (10) et la ou les hélices propulsives (6) en agissant sur les commandes de pas correspondantes par l'intermédiaire du réglage de l'angle de braquage de l'empennage horizontal (30,25,35).

3. Procédé de commande et de régulation selon la revendication 1 ou 2,
**caractérisé en ce qu'**il consiste à activer la boucle de commande et de régulation de l'angle de braquage de l'empennage (30,25,35) que si :
- l'angle de roulis est inférieur à 10°,
- la vitesse IAS est supérieure à 100 kts,
- et aucune action sur les axes de commande de l'appareil de la part du pilote, n'est détectée.

4. Procédé de commande et de régulation selon la revendication 3,
**caractérisé en ce qu'**il consiste à :
- (a) déterminer la puissance courante Pe délivrée par la source motrice après l'activation de la boucle de commande et de régulation,
- (b) mémoriser la puissance courante Pe,
- (c) commander une première vitesse de déplacement U= θ+ de l'empennage (30,25,35) motorisé pendant une durée T,
- (d) ensuite déterminer et mémoriser la nouvelle puissance courante Pe',
- (e) comparer Pe' à Pe,
- (f) si Pe' ≥ Pe, commander une seconde vitesse de déplacement U= θ- de l'empennage (30,25,35) motorisé pendant une durée T+1/2T, θ- étant une vitesse opposée à la première vitesse U= θ+, sinon revenir à l'étape (b),
- (g) à l'issue de la durée T+1/2T, déterminer et mémoriser la nouvelle puissance courante Pe",
- (h) comparer Pe" à Pe',
- (i) si Pe" ≥ Pe', commander une vitesse de déplacement U nulle de l'empennage motorisé, sinon revenir à l'étape (b).

5. Procédé de commande et de régulation selon l'une quelconque des revendications 1 à 4,
**caractérisé en ce qu'**il consiste à surveiller la marge de commande du pas cyclique longitudinal des pales du ou des rotors principal(aux) (10) et à inhiber la motorisation de l'empennage (30,25,35) lorsque cette marge est inférieure à un seuil déterminé.

6. Procédé de commande et de régulation selon l'une quelconque des revendications 1 à 5,
**caractérisé en ce qu'**il consiste, avec le rotor principal (10) en mode de fonctionnement en autorotation, à inhiber positivement, c'est à dire côté avant vers le haut, la motorisation de l'empennage (30,25,35) lorsqu'un seuil minimal de puissance courante du rotor principal est atteint et ce tant que la contrainte maximale du moment de mât (M) n'est pas dépassée.

7. Procédé de commande et de régulation selon l'une quelconque des revendications 1 à 5,
**caractérisé en ce qu'**il consiste, en mode de fonctionnement en autorotation, à orienter l'empennage (30,25,35) positivement en position extrême (côté avant vers le haut) pour favoriser la configuration du type autogire au niveau du giravion.

8. Système de commande et de régulation pour mettre en oeuvre le procédé de commande et de régulation d'un giravion selon l'une quelconque des revendications 1 à 7, ledit giravion comportant au moins un rotor principal (10) de sustentation, au moins une hélice (6) propulsive à pas variable et au moins une source motrice pour entraîner le(s) rotor(s) principal(aux) (10) et l'hélice ou les hélices (6), ledit système comprenant :
- des moyens pour mettre en oeuvre la première boucle de régulation en tangage ou assiette longitudinale par l'intermédiaire d'une commande cyclique longitudinale du pas des pales du ou des rotors principal(aux) (10),
- et des moyens pour mettre en oeuvre la seconde boucle de régulation en vitesse par l'intermédiaire d'une commande du pas moyen des pales de la ou des hélices (6) propulsives, **caractérisé en ce qu'**il comprend :
- un moyen d'activation et de désactivation de la troisième boucle de commande et de régulation de l'angle de braquage de l'empennage horizontal motorisé, pour minimiser la puissance totale consommée par le rotor principal (10) et la ou les hélices (6) propulsives, pour une assiette et une vitesse d'avancement donnée,
- un calculateur pour déterminer au moins la position angulaire de braquage de l'empennage horizontal motorisé,
- au moins un actionneur piloté par le calculateur et entraînant en pivotement l'empennage horizontal motorisé,
- et au moins un capteur pour vérifier la position angulaire de braquage.

9. Système de commande et de régulation selon la revendication 8,
**caractérisé en ce qu'**il comprend des moyens pour déterminer en temps réel le moment de mât (M) et la puissance consommée par le rotor principal (10).

10. Système de pilotage automatique pour un giravion comportant au moins un rotor principal (10) de sustentation, au moins une hélice (6) propulsive à pas variable et au moins une source motrice pour entraîner le(s) rotor(s) principal(aux) et l'hélice ou les hélices (6),
**caractérisé en ce qu'**il comprend un système de commande et de régulation conforme à la revendication 8 ou 9.

11. Programme de commande d'un giravion pour mettre en oeuvre le procédé de commande te de régulation conforme à l'une quelconque des revendications 1 à 7,
**caractérisé en ce qu'**il comporte un code fixé sur un support tel qu'une mémoire ou matérialisé par un signal, le code étant lisible et/ou exécutable par au moins une unité de traitement de données telle qu'un processeur embarqué ou susceptible d'être embarqué sur un giravion, pour commander et/ou réguler l'angle de braquage d'un empennage (30,25,35) horizontal motorisé, le code comportant des segments de code pour mettre en oeuvre respectivement des opérations caractéristiques ou étapes du procédé de commande et de régulation.

12. Aéronef du genre giravion, comportant un système de commande et de régulation conforme à l'une quelconque des revendications 8 et 9.

## Claims

1. Method for controlling and regulating a rotorcraft with a high and stabilised forward speed, including at least one main, lifting rotor (10), at least one variable-pitch propeller (6) and at least one power source for driving the main rotor(s) (10), said method consisting of using a first loop for regulating pitch or pitch attitude by means of a longitudinal cyclic pitch control (C) of the blades of the main rotor(s) (10) and a second loop for regulating speed by means of a control of the mean pitch of the blades of the propeller(s) (6),
**characterised in that** it consists of controlling the angle of deflection of a horizontal stabiliser (30,25,35) by using a third loop for controlling and regulating said angle of deflection of the horizontal stabiliser, in order to minimise the total power consumed by the main rotor (10) and the propeller(s) (6), for a given pitch attitude and forward speed.

2. Controlling and regulating method according to Claim 1,
**characterised in that** it consists of distributing the total power consumed between the main rotor (10) and the propeller(s) (6) by acting on the corresponding pitch controls by means of the adjustment of the angle of deflection of the horizontal stabiliser (30,25,35).

3. Controlling and regulating method according to Claim 1 or 2,
**characterised in that** it consists of activating the loop for controlling and regulating the angle of deflection of the stabiliser (30,25,35) if:
- the roll angle is less than 10°,
- the IAS speed is greater than 100 kts,
- and no action on the control axes of the craft by the pilot is detected.

4. Controlling and regulating method according to Claim 3,
**characterised in that** it consists of:
- (a) determining the current power Pe delivered by the power source after the activation of the controlling and regulating loop,
- (b) storing the current power Pe,
- (c) commanding a first displacement speed U= θ+ of the motor-driven stabiliser (30,25,35) for a duration T,
- (d) then determining and storing the new current power Pe',
- (e) comparing Pe' with Pe,
- (f) if Pe' ≥ Pe, commanding a second displacement speed U= θ- of the motor-driven stabiliser (30,25,35) for a duration T+1/2T, θ- being a speed opposite to the first speed U= θ+, otherwise returning to step (b),
- (g) at the end of the duration T+1/2T, determining and storing the new current power Pe",
- (h) comparing Pe" with Pe',
- (i) if Pe" ≥ Pe', commanding a zero displacement speed U of the motor-driven stabiliser, otherwise returning to step (b).

5. Controlling and regulating method according to any one of Claims 1 to 4,
**characterised in that** it consists of monitoring the control margin of the longitudinal cyclic pitch of the blades of the main rotor(s) (10) and inhibiting the drive of the stabiliser (30,25,35) when this margin is less than a determined threshold.

6. Controlling and regulating method according to any one of Claims 1 to 5,
**characterised in that** it consists, with the main rotor (10) in autorotation operating mode, of positively inhibiting, i.e. front side upwards, the drive of the stabiliser (30,25,35) when a minimum current power threshold of the main rotor is reached and doing so as long as the maximum stress of the mast moment (M) is not exceeded.

7. Controlling and regulating method according to any one of Claims 1 to 5,
**characterised in that** it consists, in the autorotation operating mode, of positively orienting the stabiliser (30,25,35) into the end position (front side upwards) in order to favour the configuration of the autogyro type for the rotorcraft.

8. Controlling and regulating system for carrying out the method for controlling and regulating a rotorcraft according to any one of Claims 1 to 7, said rotorcraft including at least one main, lifting rotor (10), at least one variable-pitch propeller (6) and at least one power source for driving the main rotor(s) (10) and the propeller(s) (6), said system comprising:
- means for implementing the first loop for regulating pitch or pitch attitude by means of a longitudinal cyclic control of the pitch of the blades of the main rotor(s) (10),
- and means for implementing the second loop for regulating speed by means of a control of the mean pitch of the blades of the propeller(s) (6),
**characterised in that** it comprises:
- a means for activating and deactivating the third loop for controlling and regulating the angle of deflection of the motor-driven horizontal stabiliser, in order to minimise the total power consumed by the main rotor (10) and the propeller(s) (6), for a given pitch attitude and forward speed,
- a computer for determining at least the angular position of deflection of the motor-driven horizontal stabiliser,
- at least one actuator controlled by the computer and pivotably driving the motor-driven horizontal stabiliser,
- and at least one sensor for checking the angular position of deflection.

9. Controlling and regulating system according to Claim 8,
**characterised in that** it comprises means for determining in real time the mast moment (M) and the power consumed by the main rotor (10).

10. Autopilot system for a rotorcraft including at least one main, lifting rotor (10), at least one variable-pitch propeller (6) and at least one power source for driving the main rotor(s) (10) and the propeller(s) (6),
**characterised in that** it comprises a controlling and regulating system in accordance with Claim 8 or 9.

11. Program for controlling a rotorcraft for carrying out the controlling and regulating method in accordance with any one of Claims 1 to 7,
**characterised in that** it includes a code fixed on a medium such as a memory or represented by a signal, the code being readable and/or executable by at least one data processing unit such as a processor installed or installable on board a rotorcraft, for controlling and/or regulating the angle of deflection of a motor-driven horizontal stabiliser (30,25,35), the code including code segments for respectively carrying out characteristic operations or steps of the controlling and regulating method.

12. Aircraft of the rotorcraft type, including a controlling and regulating system in accordance with either one of Claims 8 and 9.

## Patentansprüche

1. Verfahren zum Steuern und Regeln eines Drehflügelflugzeugs mit hoher stabilisierter Vortriebsgeschwindigkeit, mit mindestens einem Hauptrotor (10) für den Auftrieb, mindestens einem Vortriebspropeller mit verstellbarem Anstellwinkel und mindestens einer Antriebsquelle zum Antreiben des Hauptrotors bzw. der Hauptrotoren, wobei das Verfahren darin besteht, eine erste Regelschleife für das Nicken und Rollen durch eine Steuerung des zyklischen Anstellwinkels (C) der Rotorblätter des Hauptrotors bzw. der Hauptrotoren (10) zu verwenden, sowie eine zweite Regelschleife für die Geschwindigkeit durch eine Steuerung des mittleren Verstellwinkels der Rotorblätter des Vortriebspropellers bzw. der Vortriebspropeller (6),
**dadurch gekennzeichnet, dass** es darin besteht, den Einschlagswinkel eines Höhenleitwerks (30, 25, 35) zu steuern, indem eine dritte Schleife zum Steuern und Regeln des Einschlagwinkels des Höhenleitwerks verwendet wird, um die von dem Hauptrotor (10) und dem Vortriebspropeller bzw. den Vortriebspropellern (6) verbrauchte Gesamtleistung für eine vorgegebene Rollbewegung und eine vorgegebene Vortriebsgeschwindigkeit zu minimieren.

2. Verfahren zum Steuern und Regeln nach Anspruch 1, **dadurch gekennzeichnet, dass** es darin besteht, die verbrauchte Gesamtleistung zwischen dem Hauptrotor (10) und dem Vortriebspropeller bzw. den Vortriebspropellern (6) zu verteilen, indem man auf die Steuerungen der entsprechenden Anstellwinkel über eine Regelung des Einschlagwinkels des Höhenleitwerks (30, 25, 35) einwirkt.

3. Verfahren zum Steuern und Regeln nach Anspruch 1 oder 2,
**dadurch gekennzeichnet, dass** es darin besteht, die Schleife zum Steuern und Regeln des Einschlagwinkels des Höhenleitwerks (30, 25, 35) zu aktivieren, wenn:
- der Rollwinkel weniger als 10° beträgt,
- die Geschwindigkeit IAS höher als 100 kts ist,
- und kein Einwirken seitens des Pilots auf die Steuerachsen des Flugzeugs erfasst wird.

4. Verfahren zum Steuern und Regeln nach Anspruch 3, **dadurch gekennzeichnet, dass** es darin besteht:
- (a) Bestimmen der aktuellen Leistung Pe, die von der Antriebsquelle nach der Aktivierung der Steuer- und Regelschleife geliefert wird,
- (b) Speichern der aktuellen Leistung Pe,
- (c) Steuern einer ersten Bewegungsgeschwindigkeit U = θ+ des motorangetriebenen Höhenleitwerks (30, 25, 35) während einer Zeitdauer T,
- (d) anschließend Bestimmen und Speichern der neuen aktuellen Leistung Pe',
- (e) Vergleichen von Pe' mit Pe,
- (f) wenn Pe' ≥ Pe, Steuern einer zweiten Bewegungsgeschwindigkeit U = θdes motorangetriebenen Höhenleitwerks (30, 25, 35) während einer Zeitdauer T+½T, wobei θ- eine der ersten Geschwindigkeit U= θ+ entgegengesetzte Geschwindigkeit ist; falls dies nicht der Fall ist, Zurückkehren zum Schritt (b),
- (g) am Ende der Zeitspanne T+½T Bestimmen und Speichern der neuen aktuellen Leistung Pe",
- (h) Vergleichen von Pe" mit Pe',
- (i) wenn Pe" ≥ Pe', Steuern einer Bewegungsgeschwindigkeit U gleich Null des motorangetriebenen Höhenleitwerks; wenn dies nicht der Fall ist, Zurückkehren zum Schritt (b).

5. Verfahren zum Steuern und Regeln nach einem der Ansprüche 1 bis 4,
**dadurch gekennzeichnet, dass** es darin besteht, die Steuerungsspanne des zyklischen Anstellwinkels der Rotorblätter des Hauptrotors oder der Hauptrotoren (10) zu überwachen und den Motorantrieb des Höhenleitwerks (30, 25, 35) zu verhindern, wenn diese Spanne kleiner ist als ein vorgegebener Schwellenwert.

6. Verfahren zum Steuern und Regeln nach einem der Ansprüche 1 bis 5,
**dadurch gekennzeichnet, dass** es darin besteht, bei einem Betriebszustand des Hauptrotors (10) im Autorotationsmodus positiv, d.h. mit der Vorderseite nach oben, den Motorantrieb des Höhenleitwerks (30, 25, 35) zu verhindern, wenn der untere Schwellenwert der aktuellen Leistung des Hauptrotors erreicht ist, solange die maximale Beanspruchung durch das Biegemoment (M) der Rotorwelle nicht überschritten ist.

7. Verfahren zum Steuern und Regeln nach einem der Ansprüche 1 bis 5,
**dadurch gekennzeichnet, dass** es darin besteht, im Autorotationsmodus das Höhenleitwerk (30, 25, 35) positiv in eine Extremstellung (Vorderseite nach oben) auszurichten, um die Drehflügelkonfiguration des Drehflügelflugzeugs zu begünstigen.

8. Steuer- und Regelsystem zur Durchführung des Steuer- und Regelverfahrens eines Drehflügelflugzeugs nach einem der Ansprüche 1 bis 7, wobei das Drehflügelflugzeug mindestens einen Hauptrotor (10) für den Auftrieb, mindestens einen Vortriebspropeller (6) mit verstellbarem Anstellwinkel und mindestens eine Antriebsquelle zum Antreiben des Hauptrotors bzw. der Hauptrotoren (10) und des Propellers bzw. der Propeller (6) aufweist, wobei das System aufweist:
- Mittel zum Ausführen der ersten Regelschleife für das Nicken und Rollen durch eine zyklische Steuerung des Anstellwinkels der Rotorblätter des Hauptrotors bzw. der Hauptrotoren (10),
- und Mittel zum Ausführen der zweiten Schleife zum Regeln der Geschwindigkeit über eine Steuerung des mittleren Blattanstellwinkels des Vortriebspropellers oder der Vortriebspropeller (6),
**dadurch gekennzeichnet, dass** es aufweist:
- ein Mittel zur Aktivierung und zur Deaktivierung der dritten Schleife zum Steuern und Regeln des Einschlagwinkels des motorangetriebenen Höhenleitwerks, um die gesamte durch den Hauptrotor (10) und den Vortriebspropeller oder die Vortriebspropeller (6) verbrauchte Energie zu minimieren bei einer vorgegebenen Rollbewegung und einer vorgegebenen Vortriebsgeschwindigkeit,
- einen Rechner zum Bestimmen mindestens der Winkellage des Einschlags des motorangetriebenen Höhenleitwerks,
- mindestens ein Betätigungselement, welches durch den Rechner gesteuert ist und das Verschwenken des motorangetriebenen Höhenleitwerks antreibt,
- und mindestens einen Detektor zum Überprüfen der Einschlagwinkelstellung.

9. System zum Steuern und Regeln nach Anspruch 8,
**dadurch gekennzeichnet, dass** es Mittel aufweist zum Bestimmen des Biegemoments (M) der Rotorwelle und der durch den Hauptrotor (10) verbrauchten Leistung in Echtzeit.

10. System zur automatischen Steuerung eines Drehflügelflugzeugs, welches mindestens einen Hauptrotor (10) für den Auftrieb, mindestens einen Vortriebspropeller (6) mit variablem Anstellwinkel und mindestens eine Antriebswelle zum Antreiben des Hauptrotors bzw. der Hauptrotoren und des Propellers bzw. der Propeller (6) aufweist,
**dadurch gekennzeichnet, dass** es ein System zum Steuern und Regeln nach Anspruch 8 oder 9 aufweist.

11. Steuerprogramm eines Drehflügelflugzeugs zur Durchführung des Verfahrens zum Steuern und Regeln nach einem der Ansprüche 1 bis 7,
**dadurch gekennzeichnet, dass** es einen auf einem Träger, wie beispielsweise einem Speicher, fixierten Code aufweist, wobei der Code durch ein Signal materialisiert ist, wobei der Code lesbar und/oder ausführbar ist von mindestens einer Datenverarbeitungseinheit, wie beispielsweise einem Bord-Rechner, oder einer Einheit, die in ein Drehflügelflugzeug eingebaut werden kann, um den Einschlagwinkel eines motorangetriebenen Höhenleitwerks (30, 25, 35) zu steuern und/oder zu regeln, wobei der Code Codesegmente aufweist zur Durchführung von charakteristischen Operationen oder Verfahrensschritten des Verfahrens zum Steuern und Regeln.

12. Luftfahrzeug vom Typ Drehflügelflugzeug, mit einem System zum Steuern und Regeln gemäß einem der Ansprüche 8 und 9.
